# EUROPEAN PATENT SPECIFICATION

(11) **EP 3 818 802 B1**
(45) Date of publication and mention of the grant of the patent: **24.04.2024**
(21) Application number: 19208122.2
(22) Date of filing: 08.11.2019
(51) Int. Cl.: A01B 79/00, A01B 63/112

(54) **SYSTEM FOR MEASURING AND INTERPRETING A FORCE**
SYSTEM ZUR MESSUNG UND INTERPRETATION EINER KRAFT
SYSTÈME DE MESURE ET D'INTERPRÉTATION D'UNE FORCE

(43) Date of publication of application: 12.05.2021
(73) Proprietor: Kverneland Group Operations Norway AS, 4353 Klepp Stasjon (NO)
(72) Inventor: HONKANEN, Joel, 4350 Kleppe (NO)
(74) Representative: Mader, Joachim

(56) References cited:
- US-A1- 2014 215 984
- US-A1- 2018 284 741
- US-A1- 2019 128 690
- US-A1- 2019 317 243
- US-A1- 2019 320 574

## Description

### 1. Field of the invention

The present invention relates to a system for measuring and interpreting a force of a working implement acting on an agricultural field. The user of the system can derive valuable information from the force measurement and force interpretation and can optimize his production.

### 2. Prior art

In the prior art there have already been attempts to measure a force of an agriculture working implement.

For example, the document EP 3 420 787 A1 discloses a method for controlling operation of an agricultural system, comprising a tractor and an implement hitched through a draw bar to the tractor. The draft force applied to the implement is determined by a sensor and used for the control of the working implement such that its working tools engage or disengage from the ground and/or the agricultural product.

A similar control of the raising and lowering of a hitch on a vehicle is known from the prior art document US 8,406,966 B2.

Thus, force measurements at agriculture implements are mainly done to automatically control the working implement. However, there is a need for a system that measures and interprets a force of an agriculture implement for other purposes, for example for analyzing the soil of the agricultural field.

Document US 2019/128690 A1 relates to generating and utilizing three-dimensional terrain maps for vehicular control. A terrain mapping system for a vehicle is disclosed comprising a processor, a sensor system coupled to the processor for collecting three-dimensional terrain data, a digital camera for capturing terrain image data, a positioning system for determining location data for the vehicle and a memory for storing instructions.

Document US 2019/0317243 A1 is directed to a method for building and using soil models that determine soil properties from soil spectrum data. In an embodiment, building soil model may be accomplished using soil spectrum data received via hyperspectral sensors from a land unit.

Document US 2014/0215984 A1 relates to the automatic adjustment of a combine harvester that includes providing an electronic map with characteristics of the field, determining a work parameter of the combine harvester by means of the electronic map and adjusting an actuator of the combine harvester with the aid of the determined work parameter.

Document US 2019/0320574 A1 is directed to a system for creating a soil compaction map for a field that includes a plurality of sensors, with each sensor being provided in operative association with one of the plurality of fluid-driven actuators. Each sensor is configured to detect a force associated with its respective fluid-driven actuator as associated shanks engage the ground with movement of the tillage implement across the field.

Document US 2018/284741 A1 relates to a system, method and apparatus for data collection in an industrial production environment. The system may include a data acquisition circuit structured to interpret a plurality of detection values, wherein each of the plurality of detection values corresponding to input received from at least one of a plurality of input sensor.

### 3. Summary of the invention

The present invention proposes a system for measuring and interpreting a force according to claim 1.

Particularly, the present invention proposes a system for measuring and interpreting a force, the system comprising at least one working implement, for acting on an agricultural field, at least one force sensor, for measuring a force of the working implement, a position unit, for determining the position of the working implement, wherein the positioning unit comprises a receiver for providing position data, a data memory unit, for receiving the force data from the at least one force sensor and position data from the positioning unit, a data interpretation unit, for interpreting the force data in relation to the position data, wherein the data interpretation unit calculates an interpretation of the measured force; wherein the data interpretation unit comprises a machine learning unit that calculates the interpretation of the measured force.

For example, the measured force may be a draft force of the working implement or a longitudinal force or momentum measured on a part of the working implement. For example, the working implement may be a plough, a cultivator, a disc harrow, a packer, a roller, a chopper, a seed drill, a disc spreader, a sprayer, a mower, a rake, a tedder, a round bale wrapper, etc.

The system according to the invention correlates a force measurement of a working implement with position data obtained by a receiver, to be able to provide information about the agricultural field itself. Further, the data interpretation unit interprets the force data such that the user is assisted in assessing field conditions, abnormalities of the field, unexpected deviations or other events of interest. Thus, due to the interpretation the user must not interpret the raw force data as measured by himself, which is cumbersome, difficult or even impossible. Further, the system for calculating an interpretation of the measured force uses a machine learning unit that improves itself during use. Thus, the interpretations of the force measurements are becoming better and better over time.

Preferably, the system further comprises a display means, for displaying at least the calculated interpretation of the measured force to a user, and an input means, for allowing the user to input confirmation data for at least confirming and rejecting the interpretation of the measured draft force, wherein the machine learning unit of the data interpretation unit calculates the interpretation of the measured force based on confirmation data input by the user via the input means. Thus, the user has the possibility to confirm an interpretation of the measured force, if the interpretation is correct or the user can reject the interpretation of the measured force, if the interpretation is incorrect. This user input trains the machine learning unit, such that it improves the reliability of the interpretations. Such user input can for example be done directly when the user uses the working implement on the field, e.g. during ploughing. Then the user can directly "label" or explain to the system an abnormality of the force measured. However, a user can also provide his input at a later point in time, e.g. when analyzing the measured data after work, at a different site, or even at the site of the manufacturer of the working implement.

Preferably, the data interpretation unit further comprises a monitoring unit that calculates a prediction of the force based on the previously collected force data, compares the actual measurement of the force with the prediction of the force, and generates an alert, when deviations occur between the actual measurement of the draft force and the prediction of the force. Thus, the system can calculate a prediction of the force and can output an alert based on historical data and can inform the user that a deviation occurred. Thus, the user can be informed immediately when the system notices an event that causes a relevant deviation of the measured forces such that he can immediately perform counter measures.

For example, the user can be informed by the system that the ploughing force suddenly increased, what may be the case if a large stone is lying on the field. If, however, the ploughing force suddenly drops this may be an indication of a defect of the plough or an abnormality of the field, like a sand patch or the like.

Previously collected draft data and other data from plough and tractor and 3^{rd} party sources can be used to train the machine learning unit. The output of the machine learning unit, for example an algorithm to predict force, may be used by the monitoring unit. Thereby, the dataset used to train the learning system is not limited to just a draft force. The more data is available, the better the prediction will be.

The comparison of the actual measurement of the force with the prediction of the force may allow to predict numerical values, such as expected force magnitude, and also discrete events, such as stone detection.

Preferably, the monitoring unit provides the interpretation of the force deviation to the user, preferably via the display means.

Preferably, the system further comprises a map unit, that provides graphical map data of the agricultural field, wherein map data is shown to the user via a display means together with the force data and/or the interpretation of the measured force data. Thus, the system provides an overview, preferably a graphical overview, of the measured force in relation to the location on the field where this force was measured. Thus, the user can graphically see, where the measured force changed and can draw conclusions from this information.

Preferably, the data interpretation unit provides the interpretation of the measured force based on standardized descriptors of field features and/or of parameters. Thus, the measured force is analyzed by the data interpretation unit dependent on standardized descriptors that are for example based historical data and data or force patterns of typical occurring events and is, therefore, able to provide reasonable interpretations of the force data.

Such descriptors may for example describe a stone on the field, a sand patch, a defect of the working implement, like a puncture of a tire, a change in the overall soil condition, like looser soil, or a wrongly set working implement or an unintended change of the working implement's setting.

Preferably, the machine learning unit of the data interpretation unit comprises a neural network. A neural network can be automatically set up and trained during use. Thus, it improves its force interpretations over time.

Preferably, data interpretation unit calculates different interpretations of the measured force and assigns probabilities to the calculated interpretations. The user can then be provided with more than one interpretation of the force measurement. Thus, even if the most probable interpretation may not be true, the user has the opportunity to confirm the second or even less probable interpretations for training machine learning unit in order to label a certain event of the measured force.

Preferably, the display means is arranged on a driving means that drives the working implement, wherein the user is able to see the display means while driving the driving means and/or is arranged at a remote location. Therefore, the user, i.e. a farmer, can for example immediately see the measured data and the interpretation of the force data when working the field and can associate such interpretation to a certain event or feature of the field. On the other hand, the measured data and the interpretation of the force data can also be shown and evaluated at a remote location. This is particularly useful in case of an robotic or autonomous working implement or when the driving means is autonomous and has no driver or user on-board.

Preferably, the input means is arranged on a driving means that drives the working implement, wherein the user is able to input confirmation data while driving the driving means and/or is arranged at a remote location. Therefore, the user can for example immediately confirm or label a certain event or feature of the field or soil when working the field. On the other hand such confirmation or labeling of an event or feature of the field or soil can be done at a distant location, i.e. at home or at the site of the manufacturer of the working implement.

Preferably, the system further comprises an input means for allowing the user to manually signalize an event, wherein the data memory unit further stores an event indication that is associated to the data stored at the time of signalization. Thus, the user can signalize an event to the system, such that the data recorded is associated to this event. This allows later on to review the measured data, particularly the force data but also other recorded data at the time of the event more closely. Preferably, the input means can be simply a button, i.e. on the touch-display or a separate button, that the user presses, when he is aware of an unusual condition, particularly during working a field. Preferably, then the recorded data is flagged by the event indication to identify it as of particular interest or importance.

Preferably, when the user signalizes an event a sound recording may be started by the system such that the user can easily record further information or explanation regarding the event.

Preferably, the user may also be able to input text via the input means, for example via a touch-display, and/or to record a digital photo via a camera to further information or explanation regarding the event.

Preferably, the input means may be a mobile phone connected to the system via a wired or wireless connection, i.e. WLAN or Bluetooth.

Preferably, after the event is signalized, the data memory unit or the data interpretation unit adds the event indication to data from a specified timeframe before the event and to data of a specified timeframe after the event. Thus, preferably all data around the event is flagged by the event indication to identify it as of particular interest or importance, to become a full picture of the event's data. For example, the data 3 seconds prior and 10 seconds after the event may be flagged as data of the event. Such timing may vary according the events envisaged and working implement used.

Thus, a labelled dataset is of a certain duration before and after signaling is provided, that has a certain label assigned to it, wherein the assignment is done by the user. For example, such label can be "collision with large stone", "loose part fell off", "puncture in tire" or the like. This data can also be used to train the learning system, so eventually it can detect this event automatically, or it can be used as an automated report to service department of the manufacturer of the working implement for manual investigation.

Preferably, the data memory unit further stores data obtained from a driving means that drives the working implement, and the data interpretation unit uses this data for the calculation of the interpretation of the force. Together with the force data and the position data also other data available can be stored for evaluation and interpretation. Particularly, the driving unit, i.e. a tractor or the like, nowadays can provide various data that is of interest for the user and for the interpretation of the force data. Such data can be the actual driving speed, fuel consumption, wheel speed, driving distance, ambient temperature, etc. Further, such data can comprise implement settings, like working width, depth, or other data from the working implement.

Preferably, the system further comprises at least one acceleration sensor arranged at the working implement, for providing acceleration data of the working implement, wherein the data memory unit further stores the acceleration data and the data interpretation unit uses this acceleration data for the calculation of the interpretation of the force. The acceleration data may supplement the force data to better identify certain events, for example hitting a stone or driving over a curb or the like.

The acceleration sensor can be used to provide information about the orientation/tilt of the working implement. The acceleration sensor can be IMU (Inertial Measurement Unit) sensor. Such IMU sensor has multi axis accelerometers, gyroscopes for angular speed, magnetometer for compass heading, internal signal processing, sensor fusion etc. in the same sensor package available for use. Such an IMU sensor thus provides full 3D orientation/angular speeds/heading data that can be stored and/or used by the data interpretation unit.

Preferably, the system comprising at least two draft force sensors, for measuring the draft force required to move the working implement while working the agricultural field. Preferably, the two draft force sensors are arranged at the left and right side of the hitch of the working implement or of the hitch of the driving means.

### 4. Description of the Figures

In the following preferred embodiments of the invention are disclosed by means of the figures. In which shows:
- Fig. 1:: a schematic view of an exemplary embodiment of the system; and
- Fig. 2:: a view of a display according an embodiment of the system.

### 5. Description of preferred embodiments

In the following preferred embodiments of the invention are disclosed by means of the figures.

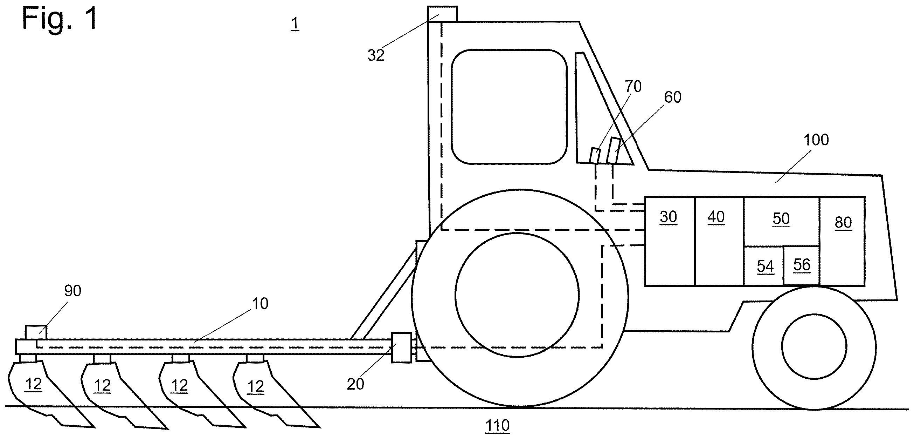

Fig. 1 shows an exemplary embodiment of the system 1 comprising a working implement 10, a force sensor 20, a position unit 30, a data memory unit 40, a data interpretation unit 50, display means 60, input means 70 and an acceleration sensor 80.

The working implement 10 is in form of a plough 10 connect to a driving means 100 in form of a tractor 10. As shown the tractor 10 is presently ploughing the soil no of an agricultural field. However, the working implement 10 can also be any other agricultural tool, like for example a cultivator, a disc harrow, a packer, a roller, a chopper, a seed drill, a disc spreader, a mower, a rake, a tedder, a round bale wrapper, etc.

The force sensor 20 is attached to the working implement 10 or to the driving means 100 in the area of the hitch. Preferably, the force sensor 20 measures a pulling force or draft force required to move the working implement 10. However, the force sensor 20 could also measure a longitudinal force or momentum on a part of the working implement 10, for example at one or all of the plough shares 12.

The position unit 30, determines the position of the working implement 10. The positioning unit comprises a receiver 32 for providing position data. Preferably, the receiver 32 may be a satellite receiver, for example a GPS receiver. As shown the position unit 30 and the GPS receiver 32 can be arranged at the driving means 10, which in most cases provides exact enough data for determining the position of the working implement 10. However, the position unit 30 and the GPS receiver 32 may also be arranged on the working implement 10.

For receiving the force data 22 from the at least one force sensor 20 and position data from the positioning unit 30 and for storing such data the system 1 further comprises a data memory unit 40. Like the position unit 30 the data memory unit 40 can be arranged at the driving means 10. However, it may also be arranged on the working implement 10. Further the memory unit 40 may be implemented by a data cloud.

The data interpretation unit 50, interprets the force data 22 in relation to the position data, wherein the data interpretation unit 50 calculates an interpretation of the measured force 52. For doing so the data interpretation unit 50 comprises a machine learning unit 54 that calculates the interpretation of the measured force 52. As shown in Fig. 1 the data interpretation unit 50 can be arranged at the driving means 10. However, it may also be arranged on the working implement 10.

Further, data interpretation unit 50 and/or data memory unit 40 could be in a remote location where data is sent both ways via telemetry or other mobile data connection. In an embodiment the machine learning unit 52, which may be the brain of the system 1 may require heavy computation, is at remote location, whereas lighter computation can be done locally at the driving means 100 or working implement 10.

There are two main methods to train the machine learning unit 52:
(A) In a local training "on the go" while ploughing and figuring out the expected normal condition or unexpected special events. This can be done automatically or by a user confirmed hypothesis in form of an interpretation 52.
(B) By remote training by incorporating all data sets available for all machines. This may comprise to collect force data and other data and send it to remote location for training. This is centralized training and typically done remote due to big data processing power needed. Typically, the results of training will then be available at a later point in time, not directly "on the go" as by method A. The training is preferably based on data collection from manual operations over time worldwide, and creates a more comprehensive machine learning system.

The machine learning unit 54 can use known Machine Learning (ML) methods. Such machine learning methods may comprise supervised learning, unsupervised learning, reinforcement learning and neural networks/deep learning. Thus, the machine learning unit 52 can use different ML tools to comply with different situations. For example detecting a stone impact would require different ML methods than predicting the actual numerical value draft force value ahead of time.

Apart from force data interpretation by machine learning in the machine learning unit 54 the data interpretation unit 50 may also perform other numerical calculations to the measured data. Such calculations may comprise statistical calculations, like averaging, pre-filtering, low pass filtering, differencing of two signals, etc. of the measured data. Such calculations can be implement in a standard machine controller, and are preferably applicable in the monitoring unit 56, for informing user of the machine state. Every time the set time interval lapses, a recalculation is made, and the user gets updated on the calculated predictions. Additionally, these prediction values can be provided to the machine learning unit 54, too, so that it can be taught to predict changes, detect abnormalities etc. in these slowly changing prediction values. Thus, the machine learning unit 54 could learn to predict on different base data, with different update rates, which may all originating from same raw data stream: In a "slow-rate-data learning mode" it may learn based on slow changing average value data. For example, it may predict the estimated total energy/time need for the whole field after ploughing just a few passes, etc. In other embodiments the system may predict a distance, a slip, a mechanical work, a efficiency, a power use, fuel consumption, etc.

In a "normal-rate-data learning mode" it may learn based on higher frequency data. For example, it may learn to interpret stone impact peaks that can be only seen in the high frequency force data stream, etc.

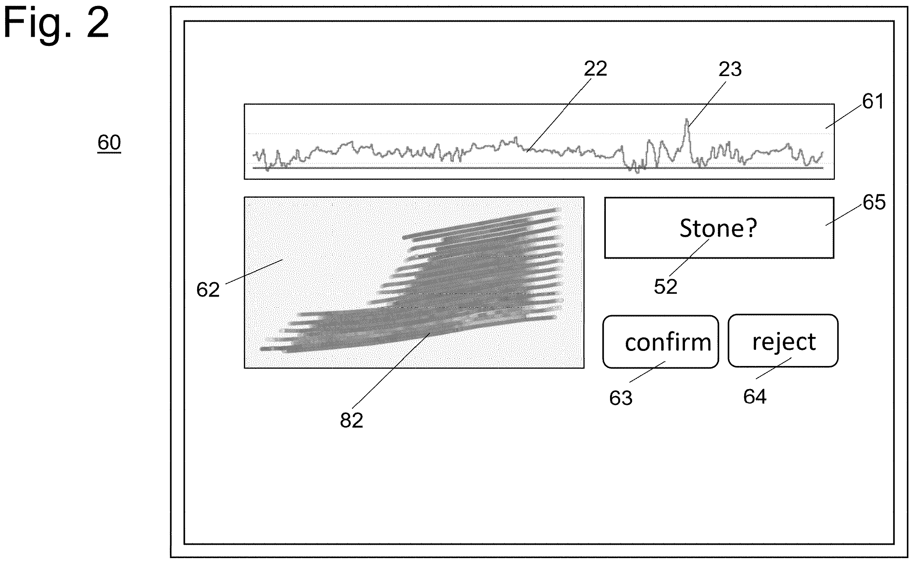

The display means 60 can be provided as digital screen. It can be arranged within the driving compartment of the driving means 100 such that the user can directly see the measured force data 52 and/or interpretation of force 52, as shown in Fig. 2. The display means 60 can, however, be also at a remote location for the user to evaluate the data and interpretation 52 at a later point in time. The display means 60 can also be realized by the screen of a user's mobile phone.

The input means 70 can comprise one or more buttons, touchpads, joysticks or the like. Preferably the input means 70 is combined with the display means 60 in the form of a separate touch-screen or realized by a mobile phone. Further the input means may be an acoustic input means that uses a microphone and an appropriate processing means for voice recognition. Thus, the user may input information orally, which is particularly useful when driving the driving means 100.

The acceleration sensor 80 is preferably arranged at the working implement 10 for measuring accelerations of the working implement.

Fig. 2 shows an exemplary display means 60 that presently shows in window 61 a graph of the force 22 over the time. The graph is preferably updated constantly when new force data 22 is measured. The force 22 in the shown example corresponds to the draft force during a ploughing operation. However, the invention can also applied to any other working of the field, and also a transport and a turning of the working implement 100 in lifted position.

The display means 60 may allow different visual layers and customized user surfaces for the visualization of the force 22 and other data and interpretation 52. In this way the user can view the interpretation 52 or data from different perspectives, helping user to take a decision or to get further insights. The user may select different predefined filters of different signal processing/mathematical functions to the data, so the user can view the data from different perspectives. For example, the user can select a "high draft" filter, that will highlight the peaks 23 of the draft force on the map 82 and/or the graph 22.

In window 62 the display means 60 shows map data 82 of the field. The map data 82 preferably comprises traces 82 of the previous working task. The map and the traces 82 are generated by a map unit 80 that obtains position data from the position unit 30. The traces 82 are preferably differently colored according to the force 22 measured at the actual position of the working implement 10 at the time of measuring. Thus, from the map data 82 the user may see deviations in the force depending on the location on the field and may draw conclusions from the force distribution.

Window 65 shows interpretations 52 of the measured force, that are calculated by the data interpretation unit 50. In the shown example the system 1 determined that the recently measured force 22 may indicate a stone on the field. This interpretation may be derived by the data interpretation unit 50 from the shape of a characteristic peak 23 of the graph of the force.

After the interpretation 52 is shown to the user, it can use the touch screen buttons 63 or 64 to confirm the interpretation 52 or to reject the interpretation 52. This user input is used to train the machine learning unit 54, which may comprise a neural network, to become better over time. Thus, over time the interpretations 52 of the data interpretation unit 50 is becoming better and better, such that the system 1 interprets the measured data with a higher certainty.

Some machine learning by the machine learning unit 54 could be done without user input. This is dependent on the machine learning methods used. For example, unsupervised learning does not require a user confirmation. Thus, the system 1 can comprise built in predefined interpretations that are applied to the measured data without user confirmation needed. For example, by an all stone-detection-training the system 1 learned to detect a stone with a certain acceptable probability. Then this stone detect algorithm can be built into a future version of the system and no longer requires confirmation from user each time this event occurs. It is important to allow the machine learning unit 52 to evolve and become smarter as time goes. Then new challenges can be given to the system 1 that again require to ask the user for confirmation to allow learning.

This interpretation 52 of force data can be used to identify and localize different soil conditions, special features of the field that should be inspected further, to perform agricultural working tasks in an optimal way, for example in the economically best way, where e.g. time versus fuel consumption is optimized.

The preferred embodiment is shown by a ploughing operation example and measuring the draft force 22, however, the invention not limited to just draft force, but is related to machine learning for agricultural implements 10 in general.

## Claims

1. A system (1) for measuring and interpreting a force, the system comprising:
a. at least one working implement (10), for acting on an agricultural field;
b. at least one force sensor (20), for measuring a force of the working implement (10);
c. a position unit (30), for determining the position of the working implement (10), wherein the positioning unit comprises a receiver (32) for providing position data;
d. a data memory unit (40), for receiving the force data (22) from the at least one force sensor (20) and position data from the positioning unit (30);
e. a data interpretation unit (50), for interpreting the force data (22) in relation to the position data, wherein the data interpretation unit (50) calculates an interpretation of the measured force (52); wherein
f. the data interpretation unit (50) comprises a machine learning unit (54) that calculates the interpretation of the measured force (52).

2. System according to claim 1, further comprising
a. a display means (60), for displaying at least the calculated interpretation of the measured force (52) to a user; and
b. an input means (70, 63, 64), for allowing the user to input confirmation data for at least confirming and rejecting the interpretation of the measured force; wherein
c. the machine learning unit (54) of the data interpretation unit (50) calculates the interpretation of the measured force (52) based on confirmation data input by the user via the input means (70).

3. System according to one of the claims 1 or 2, wherein the data interpretation unit (50) further comprises a monitoring unit (56) that
a. calculates a prediction of the force based on the previously collected force data (22);
b. compares the actual measurement of the force with the prediction of the force; and
c. generates an alert, when deviations occur between the actual measurement of the force and the prediction of the force.

4. System according to claim 3, wherein the monitoring unit (56) provides the interpretation of the force deviation to the user, preferably via a display means (60).

5. System according to one of the claims 1 to 4, further comprising a map unit (80), that provides graphical map data (82) of the agricultural field, wherein map data (82) is shown to the user via a display means (60) together with the force data (22) and/or the interpretation of the measured force data (52).

6. System according to one of the claims 1 to 5, wherein the data interpretation unit (50) provides the interpretation of the measured force (52) based on standardized descriptors of field features and/or of soil parameters.

7. System according to one of the claims 1 to 6, wherein the machine learning unit (54) of the data interpretation unit (50) comprises a neural network.

8. System according to one of the claims 1 to 7, wherein the data interpretation unit (50) calculates different interpretations of the measured force (52) and assigns probabilities to the calculated interpretations.

9. System according to one of the claims 1 to 8, wherein the display means (60)
a. is arranged on a driving means (100) that drives the working implement (10), wherein the user is able to see the display means (60) while driving the driving means (100); and/or
b. is arranged at a remote location.

10. System according to one of the claims 1 to 9, wherein the input means (70)
a. is arranged on a driving means (100) that drives the working implement (10), wherein the user is able to input confirmation data while driving the driving means (100); and/or
b. is arranged at a remote location.

11. System according to one of the claims 1 to 10, further comprising an input means (75) for allowing the user to manually signalize an event, wherein the data memory unit (40) further stores an event indication that is associated to the data stored at the time of signalization.

12. System according to claim 11, wherein after the event is signalized, the data memory unit (40) or the data interpretation unit (50) adds the event indication to data from a specified timeframe before the event and to data of a specified timeframe after the event.

13. System according to one of the claims 1 to 12, wherein the data memory unit (40) further stores data obtained from a driving means (100) that drives the working implement (10), and the data interpretation unit (50) uses this data for the calculation of the interpretation of the force (52).

14. System according to one of the claims 1 to 13, further comprising at least one acceleration sensor (90) arranged at the working implement (10), for providing acceleration data of the working implement (10), wherein the data memory unit (40) further stores the acceleration data and the data interpretation unit (50) uses this acceleration data for the calculation of the interpretation of the force (52).

15. System according to one of the claims 1 to 14, comprising at least two draft force sensors (20), for measuring the draft force required to move the working implement (10) while working the agricultural field.

## Patentansprüche

1. System (1) zum Messen und Interpretieren einer Kraft, wobei das System umfasst:
a. mindestens ein Arbeitsgerät (10) zum Einwirken auf ein landwirtschaftliches Feld;
b. mindestens einen Kraftsensor (20) zum Messen einer Kraft des Arbeitsgeräts (10);
c. eine Positionseinheit (30) zum Bestimmen der Position des Arbeitsgeräts (10), wobei die Positionseinheit einen Empfänger (32) zum Bereitstellen von Positionsdaten umfasst;
d. eine Datenspeichereinheit (40) zum Empfangen der Kraftdaten (22) von dem mindestens einen Kraftsensor (20) und von Positionsdaten von der Positionseinheit (30);
e. eine Dateninterpretationseinheit (50) zum Interpretieren der Kraftdaten (22) in Bezug auf die Positionsdaten, wobei die Dateninterpretationseinheit (50) eine Interpretation der gemessenen Kraft (52) berechnet; wobei
f. die Dateninterpretationseinheit (50) eine Machine-Learning-Einheit (54) umfasst, die die Interpretation der gemessenen Kraft (52) berechnet.

2. System nach Anspruch 1, ferner umfassend
a. ein Anzeigemittel (60) zum Anzeigen zumindest der berechneten Interpretation der gemessenen Kraft (52) für einen Benutzer; und
b. ein Eingabemittel (70, 63, 64), um es dem Benutzer zu ermöglichen, Bestätigungsdaten zumindest zum Bestätigen und Ablehnen der Interpretation der gemessenen Kraft einzugeben; wobei
c. die Machine-Learning-Einheit (54) der Dateninterpretationseinheit (50) die Interpretation der gemessenen Kraft (52) basierend auf Bestätigungsdaten berechnet, die durch den Benutzer über das Eingabemittel (70) eingegeben werden.

3. System nach einem der Ansprüche 1 oder 2, wobei die Dateninterpretationseinheit (50) ferner eine Überwachungseinheit (56) umfasst, die
a. eine Vorhersage der Kraft basierend auf den zuvor gesammelten Kraftdaten (22) berechnet;
b. die tatsächliche Messung der Kraft mit der Vorhersage der Kraft vergleicht; und
c. einen Alarm erzeugt, wenn Abweichungen zwischen der tatsächlichen Messung der Kraft und der Vorhersage der Kraft auftreten.

4. System nach Anspruch 3, wobei die Überwachungseinheit (56) die Interpretation der Kraftabweichung für den Benutzer bereitstellt, vorzugsweise über ein Anzeigemittel (60).

5. System nach einem der Ansprüche 1 bis 4, ferner umfassend eine Karteneinheit (80), die grafische Kartendaten (82) des landwirtschaftlichen Felds bereitstellt, wobei Kartendaten (82) dem Benutzer über ein Anzeigemittel (60) zusammen mit den Kraftdaten (22) und/oder der Interpretation der gemessenen Kraftdaten (52) angezeigt werden.

6. System nach einem der Ansprüche 1 bis 5, wobei die Dateninterpretationseinheit (50) die Interpretation der gemessenen Kraft (52) basierend auf standardisierten Deskriptoren von Feldmerkmalen und/oder von Bodenparametern bereitstellt.

7. System nach einem der Ansprüche 1 bis 6, wobei die Machine-Learning-Einheit (54) der Dateninterpretationseinheit (50) ein neuronales Netzwerk umfasst.

8. System nach einem der Ansprüche 1 bis 7, wobei die Dateninterpretationseinheit (50) verschiedene Interpretationen der gemessenen Kraft (52) berechnet und den berechneten Interpretationen Wahrscheinlichkeiten zuweist.

9. System nach einem der Ansprüche 1 bis 8, wobei das Anzeigemittel (60)
a. auf einem Antriebsmittel (100) angeordnet ist, das das Arbeitsgerät (10) antreibt, wobei der Benutzer das Anzeigemittel (60) während des Antreibens des Antriebsmittels (100) sehen kann; und/oder
b. an einem entfernten Ort angeordnet ist.

10. System nach einem der Ansprüche 1 bis 9, wobei das Eingabemittel (70)
a. auf einem Antriebsmittel (100) angeordnet ist, das das Arbeitsgerät (10) antreibt, wobei der Benutzer Bestätigungsdaten während des Antreibens des Antriebsmittels (100) eingeben kann; und/oder
b. an einem entfernten Ort angeordnet ist.

11. System nach einem der Ansprüche 1 bis 10, ferner umfassend ein Eingabemittel (75), um es dem Benutzer zu ermöglichen, ein Ereignis manuell zu signalisieren, wobei die Datenspeichereinheit (40) ferner eine Ereignisanzeige speichert, die den zum Zeitpunkt der Signalisierung gespeicherten Daten zugeordnet ist.

12. System nach Anspruch 11, wobei, nachdem das Ereignis signalisiert wurde, die Datenspeichereinheit (40) oder die Dateninterpretationseinheit (50) die Ereignisanzeige zu Daten aus einem spezifizierten Zeitrahmen vor dem Ereignis und zu Daten aus einem spezifizierten Zeitrahmen nach dem Ereignis hinzufügt.

13. System nach einem der Ansprüche 1 bis 12, wobei die Datenspeichereinheit (40) ferner Daten speichert, die von einem Antriebsmittel (100) erhalten werden, das das Arbeitsgerät (10) antreibt, und die Dateninterpretationseinheit (50) diese Daten für die Berechnung der Interpretation der Kraft (52) verwendet.

14. System nach einem der Ansprüche 1 bis 13, ferner umfassend mindestens einen Beschleunigungssensor (90), der am Arbeitsgerät (10) angeordnet ist, zum Bereitstellen von Beschleunigungsdaten des Arbeitsgeräts (10), wobei die Datenspeichereinheit (40) ferner die Beschleunigungsdaten speichert und die Dateninterpretationseinheit (50) diese Beschleunigungsdaten für die Berechnung der Interpretation der Kraft (52) verwendet.

15. System nach einem der Ansprüche 1 bis 14, umfassend mindestens zwei Zugkraftsensoren (20) zum Messen der Zugkraft, die erforderlich ist, um das Arbeitsgerät (10) während der Arbeit des landwirtschaftlichen Felds zu bewegen.

## Revendications

1. Un système (1) pour la mesure et l'interprétation d'une force, le système comprenant :
a. au moins un outil de travail (10), pour agir sur un champ agricole ;
b. au moins un capteur de force (20), pour mesurer une force de l'outil de travail (10) ;
c. une unité de positionnement (30), pour déterminer la position de l'outil de travail (10), l'unité de positionnement comprenant un récepteur (32) pour délivrer des données de position ;
d. une unité de mémoire de données (40), pour recevoir les données de force (22) de l'au moins un capteur de force (20) et les données de position de l'unité de positionnement (30) ;
e. une unité d'interprétation de données (50), pour interpréter les données de force (22) en relation avec les données de position, l'unité d'interprétation de données (50) calculant une interprétation de la force mesurée (52), dans lequel
f. l'unité d'interprétation de données (50) comprend une unité à apprentissage machine (54) qui calcule l'interprétation de la force mesurée (52).

2. Système selon la revendication 1, comprenant en outre :
a. un moyen d'affichage (60), pour afficher à un utilisateur au moins l'interprétation calculée de la force mesurée (52) ; et
b. un moyen d'entrée (70, 63, 64), pour permettre à l'utilisateur d'entrer des données de confirmation pour au moins confirmer et rejeter l'interprétation de la force mesurée ; dans lequel
c. l'unité d'apprentissage machine (54) de l'unité d'interprétation de données (50) calcule l'interprétation de la force mesurée (52) sur la base des données de confirmation introduites par l'utilisateur via les moyens d'entrée (70).

3. Système selon l'une des revendications 1 ou 2, dans lequel l'unité d'interprétation de données (50) comprend en outre une unité de surveillance (56) qui :
a. calcule une prédiction de la force, sur la base des données de force précédemment recueillies (22) ;
b. compare la mesure réelle de la force avec la prédiction de la force ; et
c. génère une alerte lorsque des écarts surviennent entre la mesure réelle de la force et la prédiction de la force.

4. Système selon la revendication 3, dans lequel l'unité de surveillance (56) délivre à l'utilisateur l'interprétation de l'écart de force, de préférence via un moyen d'affichage (60).

5. Système selon l'une des revendications 1 à 4, comprenant en outre une unité cartographique (80) qui délivre graphiquement des données graphiques de carte (82) du champ agricole, dans lequel des données de carte (82) sont présentées à l'utilisateur via un moyen d'affichage (60) en même temps que les données de force (22) et/ou que l'interprétation des données de force mesurée (52).

6. Système selon l'une des revendications 1 à 5, dans lequel l'unité d'interprétation de données (50) délivre l'interprétation de la force mesurée (52) sur la base de descripteurs normalisés de caractéristiques du champ et/ou de paramètres du sol.

7. Système selon l'une des revendications 1 à 6, dans lequel l'unité à apprentissage machine (54) de l'unité d'interprétation de données (50) comprend un réseau neuronal.

8. Système selon l'une des revendications 1 à 7, dans lequel l'unité d'interprétation de données (50) calcule différentes interprétations de la force mesurée (52) et attribue des probabilités aux interprétations calculées.

9. Système selon l'une des revendications 1 à 8, dans lequel le moyen d'affichage (60) :
a. est agencé sur un moyen d'entraînement (100) qui entraîne l'outil de travail (10), l'utilisateur pouvant voir le moyen d'affichage (60) tout en conduisant le moyen d'entraînement (100) ; et/ou
b. est agencé en un emplacement distant.

10. Système selon l'une des revendications 1 à 9, dans lequel le moyen d'entrée (70) :
a. est agencé sur un moyen d'entraînement (100) qui entraîne l'outil de travail (10), l'utilisateur pouvant introduire les données de confirmation tout en conduisant le moyen d'entraînement (100) ; et/ou
b. est agencé en un emplacement distant.

11. Système selon l'une des revendications 1 à 10, comprenant en outre un moyen d'entrée (75) pour permettre à l'utilisateur de signaler manuellement un événement, dans lequel l'unité de mémoire de données (40) stocke en outre un indicateur d'évènement qui est associé aux données stockées au moment de la signalisation.

12. Système selon la revendication 11, dans lequel, après que l'évènement a été signalé, l'unité de mémoire de données (40) ou l'unité d'interprétation de données (50) ajoutent l'indication d'évènement aux données qui précèdent l'évènement sur un laps de temps spécifié, et aux données qui suivent l'évènement sur un laps de temps spécifié.

13. Système selon l'une des revendications 1 à 12, dans lequel l'unité de mémoire de données (40) stocke en outre des données obtenues d'un moyen d'entraînement (100) qui entraîne l'outil de travail (10), et dans lequel l'unité d'interprétation de données (50) utilise ces données pour le calcul de l'interprétation de la force (52).

14. Système selon l'une des revendications 1 à 13, comprenant en outre au moins un capteur d'accélération (90) agencé sur l'outil de travail (10), pour délivrer des données d'accélération de l'outil de travail (10), dans lequel l'unité de mémoire de données (40) stocke en outre les données d'accélération, et dans lequel l'unité d'interprétation de données (50) utilise ces données d'accélération pour le calcul de l'interprétation de la force (52).

15. Système selon l'une des revendications 1 à 14, comprenant au moins deux capteurs de force de traction (20), pour mesurer la force de traction requise pour déplacer l'outil de travail (10) pendant le travail du champ agricole.
